# EUROPEAN PATENT SPECIFICATION

(11) **EP 2 801 466 B1**
(45) Date of publication and mention of the grant of the patent: **02.03.2016**
(21) Application number: 14167688.2
(22) Date of filing: 09.05.2014
(51) Int. Cl.: B29C 45/14, B29C 70/76, B29C 45/44, B29C 33/12, B29C 33/44

(54) **Mould and method for overmoulding and/or encapsulation**
Formwerkzeug und Verfahren zum Umspritzen und/oder Einbetten
Moule et procédé pour surmoulage et/ou d'encapsulation

(30) Priority: 10.05.2013 IT PD20130129
(43) Date of publication of application: 12.11.2014
(73) Proprietor: Uniteam Italia S.r.L., 30020 Quarto d'Altino Venezia (IT)
(72) Inventor: Furlan, Mario, I-30020 Quarto D'Altino, VENEZIA (IT)
(74) Representative: Mitola, Marco

(56) References cited:
- FR-A- 1 028 485
- GB-A- 482 696
- JP-A- H0 469 222
- JP-A- H02 249 616
- JP-A- S62 251 114
- JP-A- 2006 319 226
- US-A- 5 196 210

## Description

### FIELD OF APPLICATION

The present invention relates to a mould for over-moulding and/or encapsulation, in particular for over-moulding and/or encapsulating a glass sheet by means of a polymeric material, and further relates to a method of over-moulding and/or encapsulation.

### STATE OF THE ART

In various sectors of the art, for example in fixed windows of cars, but also in glass shelves of refrigerators, there is a need for manufacturing a frame, usually having a sealing or dampening function, with plastic material (usually at least in part also in rubber) on a piece of glass.

Therefore, there is a need to apply, at least partially on the edge of a glass sheet, a frame in a plastic material. The application of such frame is carried out by means of an over-moulding technique, also referred to as encapsulation when the application of the frame takes place on the entire perimeter of the sheet.

In order to ensure the over-moulding it is necessary to make sure the plastic material cannot penetrate between the mould and the piece of glass; it is therefore necessary to guarantee a certain closing force to the mould. Unfortunately, due to production requirements, not all pieces of glass have the same thickness and moreover the planarity of glass (or the compliance of the mathematical non-planar surface) is not always complied with. Therefore, there is a risk for the closing force, necessarily high in order to prevent the plastic material from coming out of the mould, to be incorrectly calibrated upon variation of the glass thickness, thus leading to a breakage of the same. This is particularly true when referring to thermoplastic polymers, which have higher process temperatures and pressures than the other instances, and thus require a better closing of the mould. Summarising, on the one hand there is a need for closing the mould as much as possible in order to prevent the plastic material from coming out of the mould, and, on the other, there is a risk for breaking the glass due to such tightening.

Historically, numerous solutions attempting to solve this problem have already been made.

For example, a closing edge of the mould has been devised with materials having a low elastic modulus, such as for example Teflon or rubbers.

An example of this possible solution is described in US5196210.

This type of solution, however, has some disadvantages: in fact this closes with little closing force and requires a lot of maintenance. In order to obviate the problem of the closing force, the solution of the Japanese Patent JPH02147220A is also known which, however, is very complex and not always effective.

Furthermore, this type of solutions may lead to geometrical and functional defects of the moulded part in that the closing line of the mould may fail under the pressure of plastic.

The solution of US20060461986 is also known, which, however, is quite complex and requires the use of dedicated and costly equipment.

Moulds for over-moulding glass sheets which comprise slidable inserts and actuation/locking wedges for sheet fixation are known from JP S62 251114 and JP H02 249616, both disclose the preamble of claim 1.

JP H04 69222 discloses over-moulding of glass sheets of varying thickness, which are clamped by a spring biased resin insert in order to avoid breakage of the sheet.

In order to over-mould substrates with varying thickness it is known from JP 2006 319226 to use spring-biased slidable inserts which are actuated/locked by wedges.

US 5 196 210 discloses a mould for over-moulding glass sheets where elastic means are positioned between pushing plates and wedges in order to press resilient sealing members against a glass sheet.

### DISCLOSURE OF THE INVENTION

As seen, the solutions of the prior art do not allow to overcome the technical problems described above.

In particular, at present, there are no known reliable and cheap solutions which ensure a correct over-moulding without risking to fracture the glass sheet to over-press or encapsulate, especially when thermoplastic materials are moulded on sheets having large surfaces.

There is therefore a need to solve the drawbacks and limitations mentioned with reference to the prior art.

Such need is fulfilled by a mould in accordance with claim 1 and by a moulding method in accordance with claim

### DESCRIPTION OF THE DRAWINGS

Further features and the advantages of the present invention will appear more clearly from the following description of preferred non-limiting embodiments thereof, wherein:

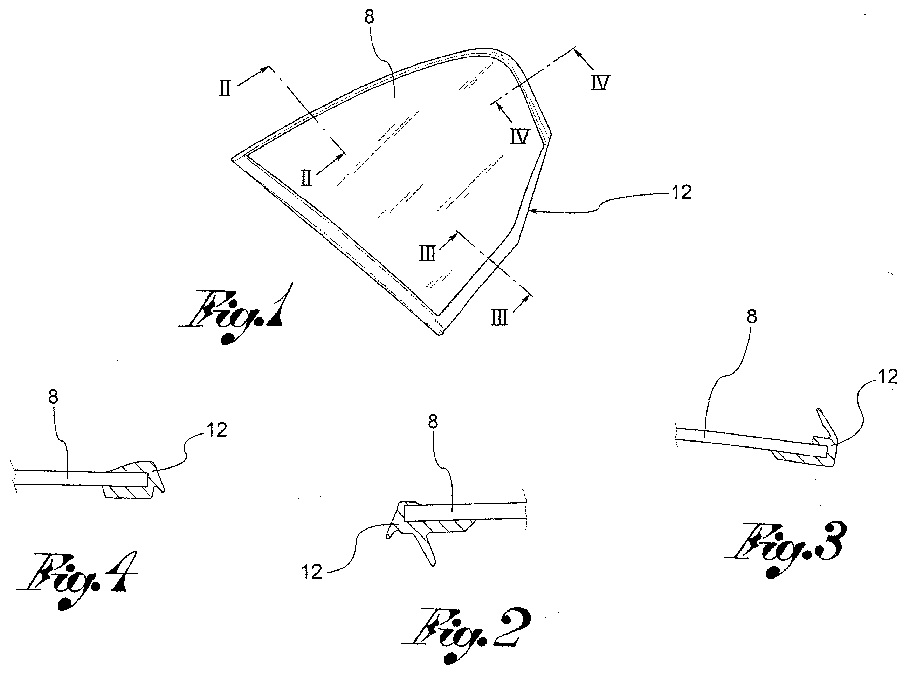

figure 1 shows a perspective view of an example of part moulded according to the mould and/or moulding method according to the present invention;
figure 2 shows an enlarged cutaway view of a detail of the part of figure 1, along the section plane II-II of figure 1;
figure 3 shows an enlarged cutaway view of a detail of the part of figure 1, along the section plane III-III of figure 1;
figure 4 shows an enlarged cutaway view of a detail of the part of figure 1, along the section plane IV-IV of figure 1;
figures 5-14 show schematic views of the steps of a moulding sequence according to a first embodiment of the present invention, including an additional extraction device (56)
figure 15 shows an enlarged view of a detail of a mould according to a first embodiment of the present invention;
figures 16-19 show schematic views of the steps of a moulding sequence according to a further embodiment of the present invention,

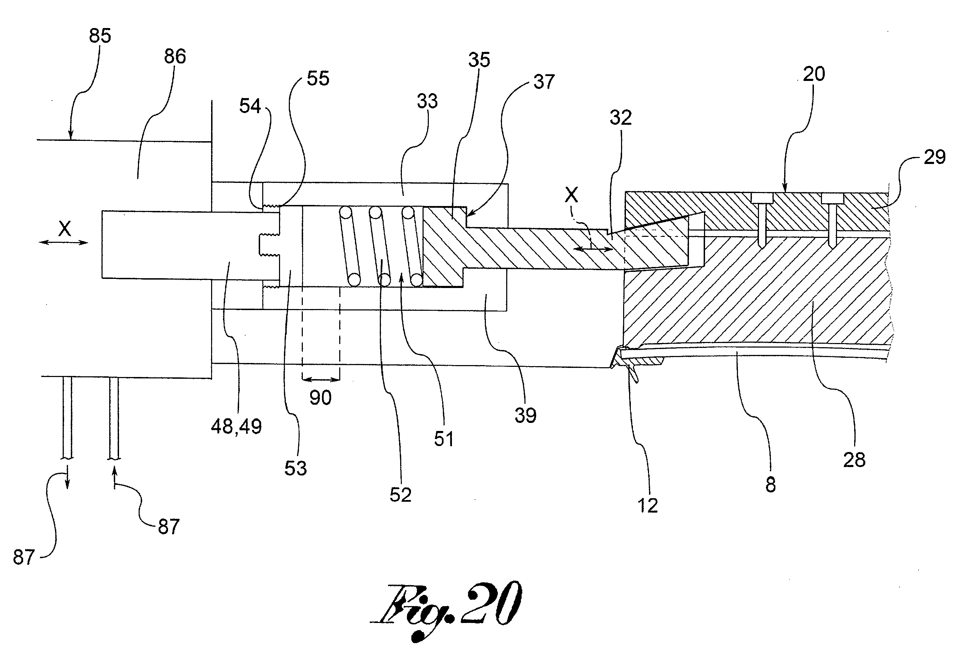

figure 20 shows a schematic cutaway view of a detail of the control means of the mould according to the present invention;

Elements or parts of elements in common between the embodiments described below are referred to with the same reference numerals.

### DETAILED DESCRIPTION

With reference to the above-mentioned figures, 4 globally indicates a mould for over-moulding and/or encapsulating a sheet 8. Preferably, the sheet is a sheet made from a fragile material, such as for example glass, and may be both planar and have concave and/or convex areas.

As better described hereinafter, the purpose of the moulding according to the present invention is to obtain a perimeter frame 12 around an edge of the sheet 8; such perimeter frame 12 may partially or even completely cover the edge of the sheet 8.

The mould 4 comprises a punch 16 suitable for supporting the sheet 8 to over-press and/or encapsulate, a matrix 20 suitable for closing onto the punch 16 so as to delimit with the latter an injection chamber 24 to contain the material to be injected. The matrix 20 and the punch 16 are movable axially to each other relative to an opening/closing axial direction Y-Y of the mould 4.

The mould 4 further comprises an insert 28, slidably associated with said matrix 20 along at lest said axial direction Y-Y, wherein the insert 28 interfaces with the sheet 8 and defines together with the sheet 8, the matrix 20 and the punch 16, the outline of said injection chamber 24.

The mould 4 comprises at least one closing and locking wedge 32 provided with a thrust wall 36, inclined, sliding on an inclined plane 40 associated with the insert 28, so that the displacement of the closing and locking wedge 32 along an actuating direction X-X leads to a translation of the insert 28, relative to the matrix 20 and the punch 16, along the axial direction Y-Y.

Preferably, the mechanical coupling between the closing and locking wedge 32 and the insert 28 is of the irreversible type; in other words, a thrust exerted on the insert, along the axial direction Y-Y is not able to move the closing and locking wedge 32 along the actuating direction X-X.

Preferably, said actuating direction X-X is perpendicular to the axial direction Y-Y.

According to one embodiment, the insert 28 comprises at least one locking seat 44 provided with said inclined plane 40, with the locking seat 44 accommodating at least partially the closing and locking wedge 32 so at to make the sliding possible between the thrust wall 36 and the inclined plane 40.

The closing and locking wedge 32 is actuated by a control means 48, such as for example a control piston 49, slidable along said actuating direction X-X.

The control means 48 may comprise a control piston 49 having a hydraulic and/or pneumatic actuation.

Furthermore, the control means 48 may also comprise an actuation by means, for example, an electric motor and/or possible transmission means; for example a linkage of the rack-and-pinion type, or even an electric motor having a linear actuation directly or indirectly connected to the closing and locking wedge 32.

Between the control means 48 and the closing and locking wedge 32 there are arranged self-regulating elastic means 52 which push the closing and locking wedge 32 against the insert 28.

Said self-regulating elastic means 52 allow to transmit to the closing and locking wedge 32 and thus to the insert 28 and to the sheet 8 a force sufficient to avoid flashes and, at the same time, to prevent the breakage of the sheet itself.

In other words, the self-regulating elastic means 52 are carefully calibrated during the design step so that the force transmitted in the allowance range of the thickness of the (glass) sheet 8 is always sufficient to ensure the absence of flashes and leaks and not so high to break the glass itself.

According to one embodiment, the self-regulating elastic means 52 are sized so as to ensure a rest allowance 90, i.e. there is provided a stroke of the control means 48 at which the self-regulating elastic means 52 do not exert any elastic action towards the same. Such rest allowance 90 allows to compensate for the thermal differences between mould and press at the beginning of the production step.

According to a possible embodiment, the control means 48 comprise a piston 49 axially slidable along the actuating direction X-X inside a cylinder 85 delimiting a chamber 86. Said chamber 86 may comprise for example oil-pressure connections 87 for the actuation thereof.

For example, between a head of the piston 49 and the closing and locking wedge there are arranged said self-regulating elastic means 52 accommodated inside a housing chamber 51.

For example, the housing chamber 51 is delimited by a sleeve 33 which accommodates the elastic means 52 and an end 35 of the closing and locking wedge 32. Said end 35 has for example a protrusion so as to create an undercut 37 with a corresponding recess 39 obtained on the sleeve 33.

Preferably, the self-regulating elastic means 52 are accommodated with a rest allowance 90.

According to one embodiment, the chamber 51 accommodating the self-regulating elastic means is partially delimited by a terminal 53 preferably locked in position by a ring 54.

The ring 54 allows to quickly disassemble the terminal 53 and access the self-regulating elastic means 52.

Preferably, the terminal 53 is inserted into the housing chamber 51 so as to have a predetermined position, for example obtained by means of a shoulder or limit stop 55. In this way, a precise control of the thrust provided by the self-regulating elastic means 52 is ensured as a function of the displacement of the control means 48.

In other words, the self-regulating elastic means 52 are accommodated in their own seat in a unique way, without the need of further adjustments by the moulding operator; furthermore, the self-regulating elastic means 52 are accommodated so that the securing system of the same provides for a rapid replacement which may take place in the case of a change in production with glasses having significantly different thicknesses.

The self-regulating elastic means 52 have the mechanical and design features that make them capable of always taking to the limit stop the control means 48, which in this way may be used independently of the hydraulic actuating pressure and may interface with limit stop and consensus signals normally present in the presses.

Preferably, the self-regulating elastic means 52 are suitably sized so as to compensate for and tolerate the errors related to the mould and oil temperature in particular taking place during the step of production start-up.

According to a possible embodiment, the insert 28 is provided with an inclined counter-plane 29 interacting with the closing and locking wedge 32 so as to obtain the lifting of the insert 28 when the retraction of the closing and locking wedge 32 is performed. In particular, such retraction of the closing and locking wedge 32 may be carried out by means of the retraction of the sleeve 33.

According to one embodiment, the insert 28 is provided with an additional extraction device 56 which provides an additional stroke to the insert 28 relative to the matrix 20, in addition to a stroke provided to the insert 28 by the closing and locking wedge 32 and the sleeve 33.

According to a possible embodiment, the additional extraction device 56 comprises a thrust spring 60 elastically affecting the insert 28 approaching the punch 16, along said axial direction Y-Y.

According to one embodiment, the insert 28 comprises at least one appendix 64 which is at least partially counter-shaped relative to a perimeter matrix portion 68, so as to identify therewith an undercut interspace 72, relative to the axial direction Y-Y; with said undercut interspace 72 being in fluid communication with the injection chamber 24. In this way, after the injection, it is possible to obtain a tab or undercut portion 76 which encloses at least partially the perimeter frame 12 of the sheet 8.

According to a further embodiment, the insert 28 is rigidly associated with a block 80 having an inclined plane 40 onto which the thrust wall 36 of the closing and locking wedge 32 slides.

Preferably, the closing and locking wedge 32 is actuated by a control means 48 along the actuating direction X-X; according to one embodiment, between the control piston 48 and the closing and locking wedge 32 there are arranged self-regulating elastic means 52 which push the closing and locking wedge 32 against the insert 28, as described above.

The operation of a mould and the related moulding method according to the present invention shall now be described.

In particular the operation of a mould and the related moulding method according two different embodiments of the present invention shall be described.

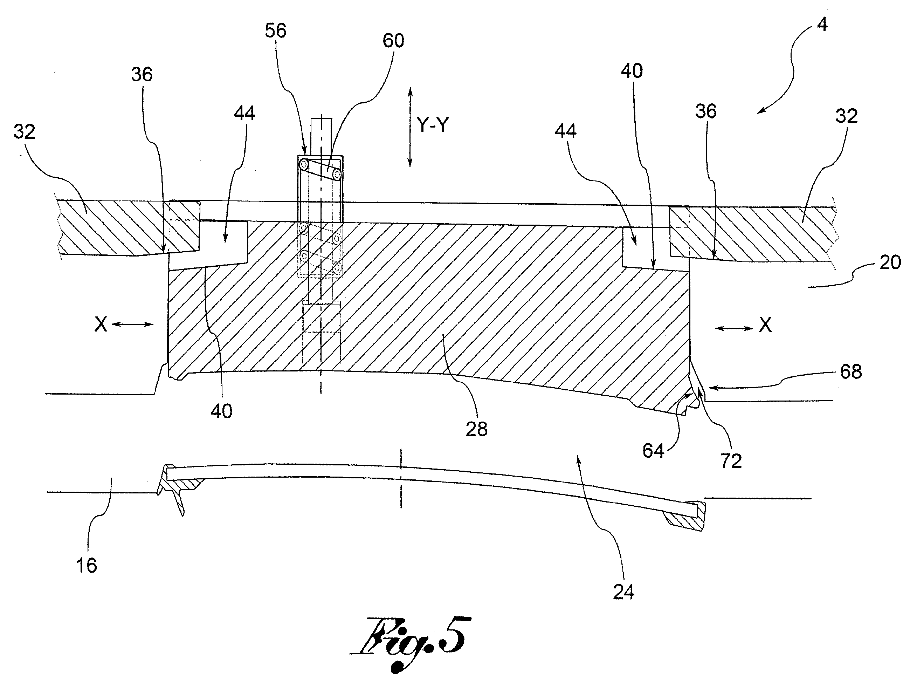

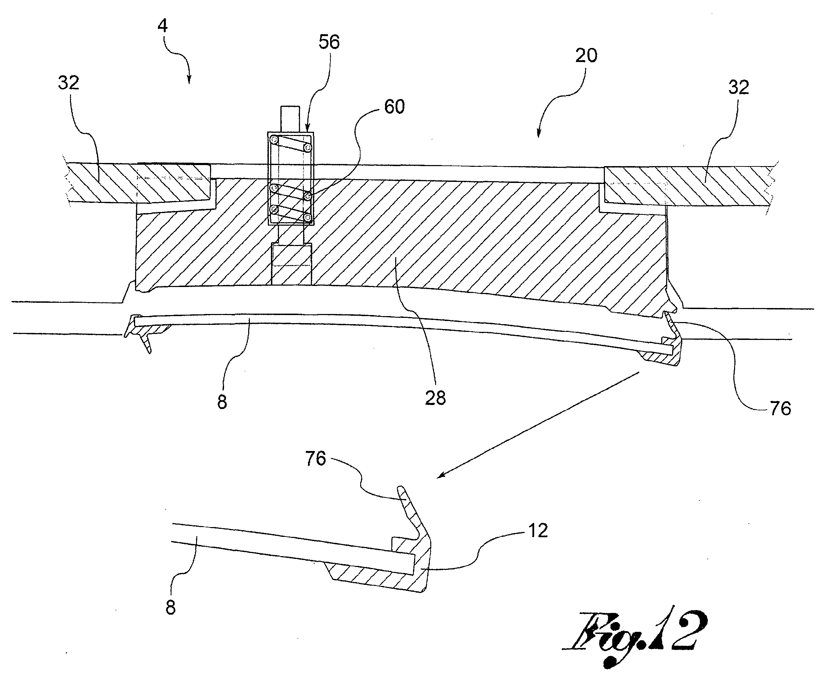

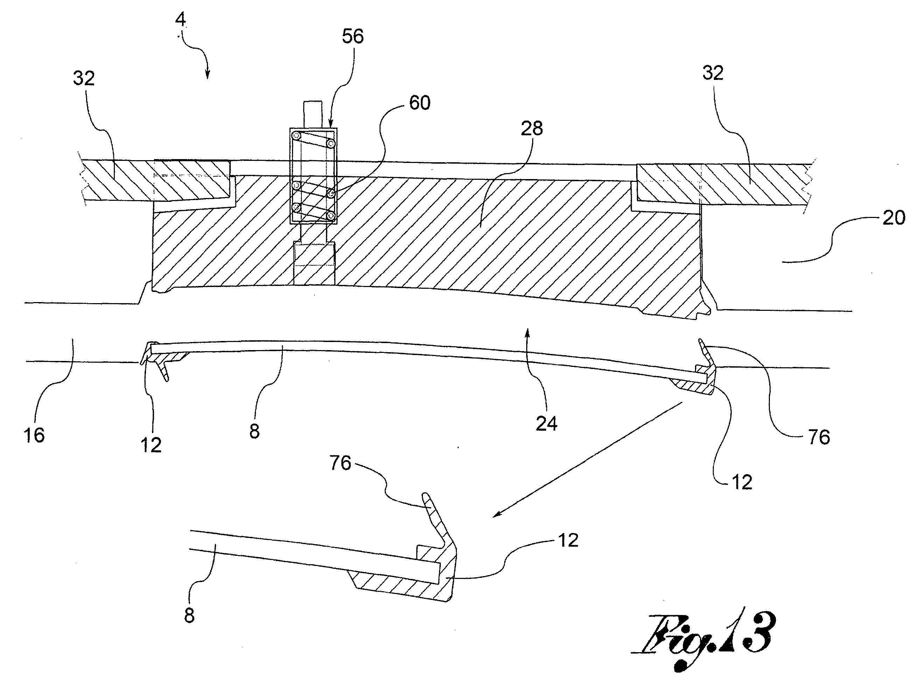

According to a first embodiment (figures 5-15), the sheet 8, for example a glass sheet, is first positioned on the punch 16, inside the mould 4 in an open condition (figure 5). In such configuration, the insert 28 is not locked by closing and locking wedges 32 which are in a retracted or rest position.

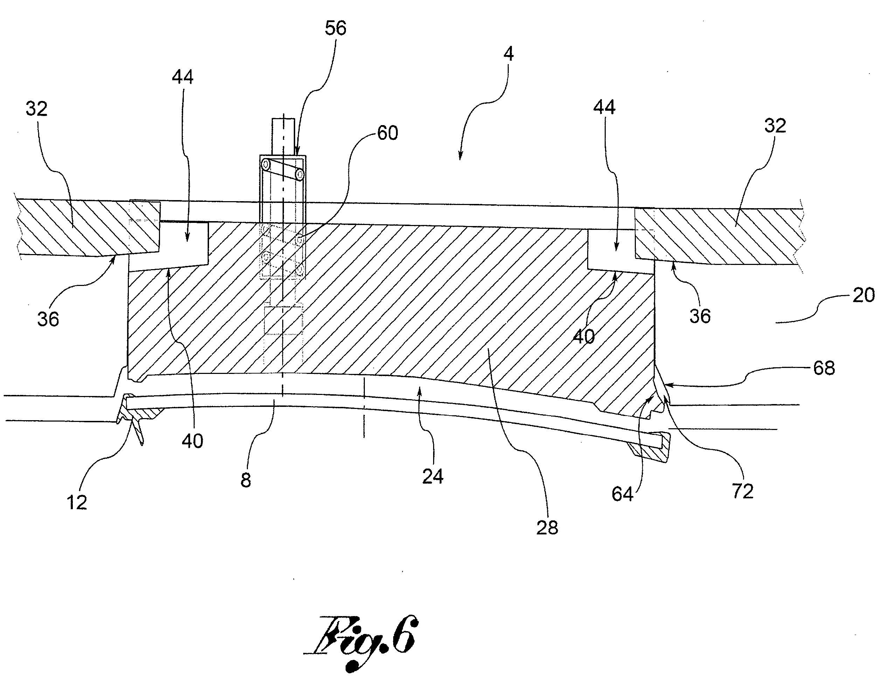

Then the mould 4 starts to be closed, moving downwards the matrix 20 which drags the insert 28 towards the punch 16 (figure 6). The insert 28 is still released by the closing and locking wedges 32.

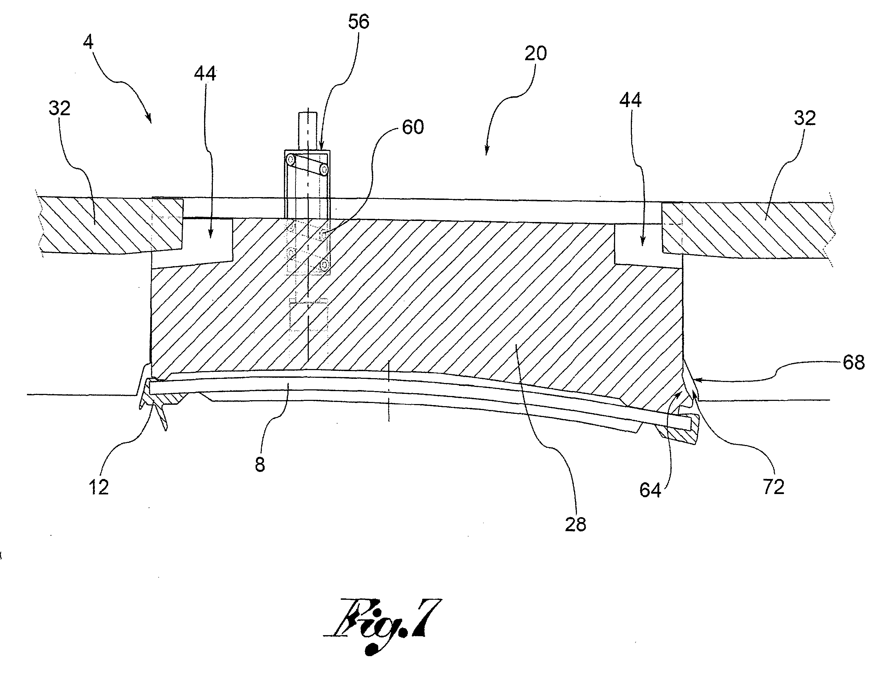

The closing step of the mould 4 is continued: the insert 28 abuts against the sheet 8 supported by the punch 16, before the matrix 20 completely closes the mould 4 and then the injection chamber 24 (figure 7).

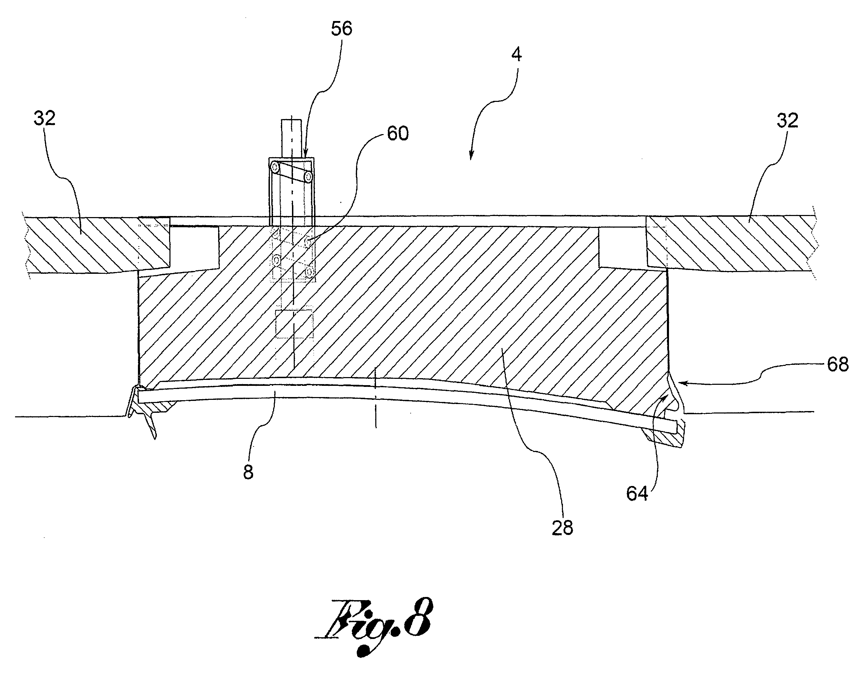

This step continues until the complete and tight closing of the mould 4 is achieved (figure 8).

In order to achieve the complete closing of the mould 4 the closing stroke or primary stroke of the mould 4 is entirely carried out. It must be noted that such closing stroke of the mould 4 may be carried out by a moulding machine of a known type.

The primary closing stroke of the mould 4 gives outward tightness to the mould 4: i.e. the material injected cannot leak out of the injection chamber 24, the matrix 20 and the punch 16.

The risk for any breakage in the sheet 8, for example due to the thickness allowances of the sheet 8, overcome since the closing of the mould 4 does not provide the total compression force of the sheet 8 which is carried out by a secondary stroke or tightening stroke applied to the insert 28 only.

Therefore, in order to inject the plastic material into the mould 4, the closing and locking wedges 32 are advanced which interfere with the respective inclined planes 40 of the counter-shaped locking seats 44, in order to prevent any retraction movement thereof, that is movement away from the punch 16, that would be generated by the thrust generated by the injected material. Such retraction movement is prevented in that the mechanical coupling between the closing and locking wedges 32 and the insert 28 is of the irreversible type and therefore any thrust on the side of the insert 28 and the punch 16 is not capable of retracting the wedges 32 in order to lift insert 28 itself and the matrix 20.

The advancing movement of the closing and locking wedges 32 provides the insert 28 with the tightening stroke or secondary stroke: in this way the final compression of the sheet 8 by the insert 28 is performed in a precise and controlled manner and any dangers of breakages of the sheet 8 are prevented.

The closing of the insert 28 on the sheet 8, by means of the tightening stroke, ensure the tightness of the injection chamber 24 towards the inside of the mould 4, that is towards the sheet 8 itself so that there cannot be any flashes on the perimeter contour separating the frame injected from the sheet itself.

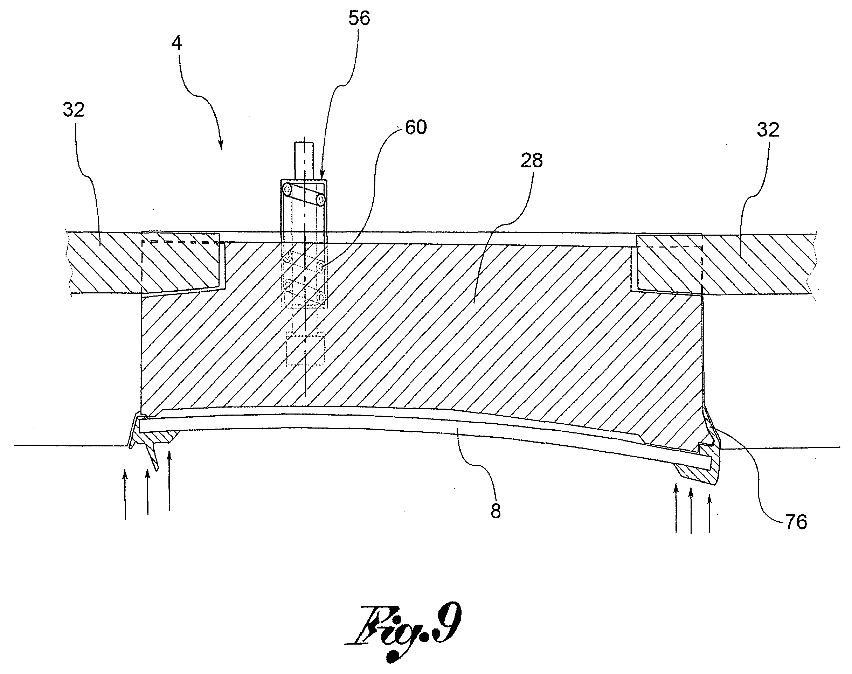

After advancing the closing and locking wedges 32, the injection of the plastic material in the mould 4 is carried out (figure 9). During the injection, the reciprocal positions between the matrix 20, the punch 16 and the insert 28 are fixed and ensured by the closing of the mould 4 and the locking of the wedges 32. After the injection, a perimeter frame 12 is therefore obtained enclosing at least partially the edge of the sheet 8, thereby obtaining the over-moulding or encapsulation (in the case of a continuous or complete perimeter frame).

The mould 4 is then opened, in order to allow the extraction of the over-pressed part.

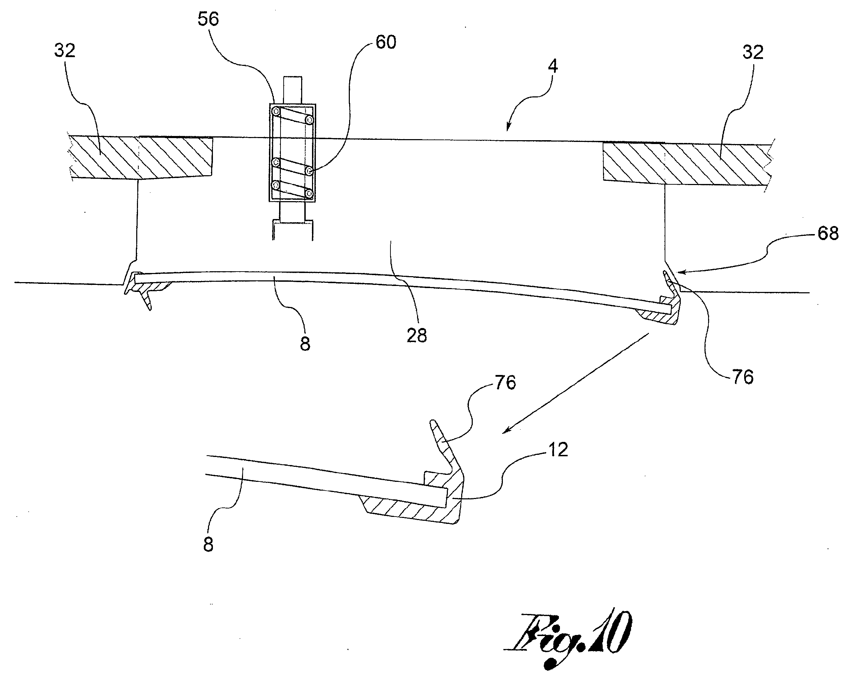

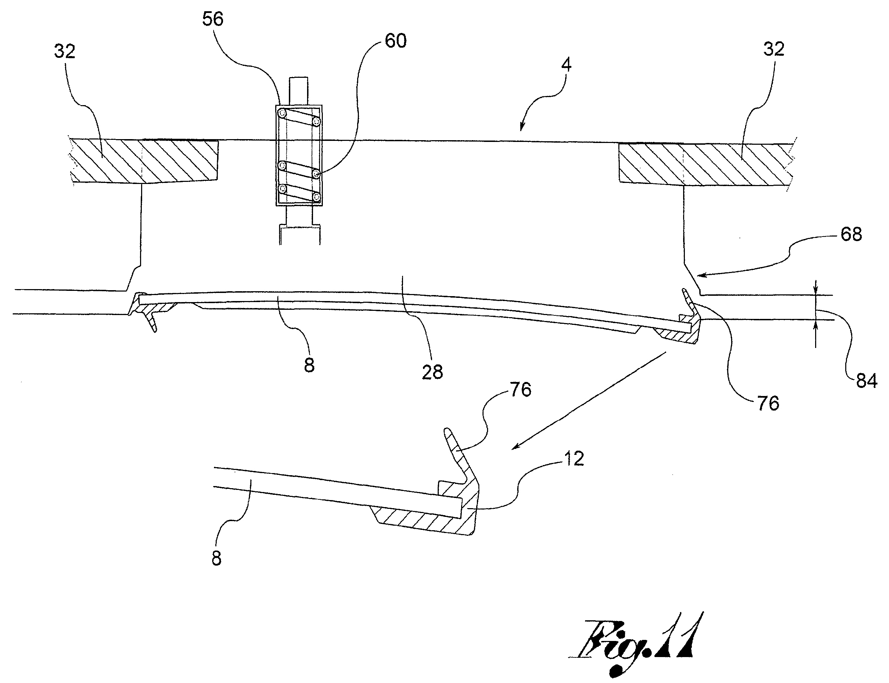

In the first opening steps of the mould 4, a gap is formed between the matrix 20 and the insert 28 (figure 10); this gap is in fact due to the additional extraction device 56, for example the thrust spring 60, which allows to create such gap; the gap therefore allows to later extract the moulded part even in provided with an undercut relative to the opening/closing axial direction Y-Y of the mould 4; in fact, the flap or tab making up the undercut may bend and be extracted through the above-mentioned gap (figures 11-13); obviously, the possibility of bending is related to the type of moulded material.

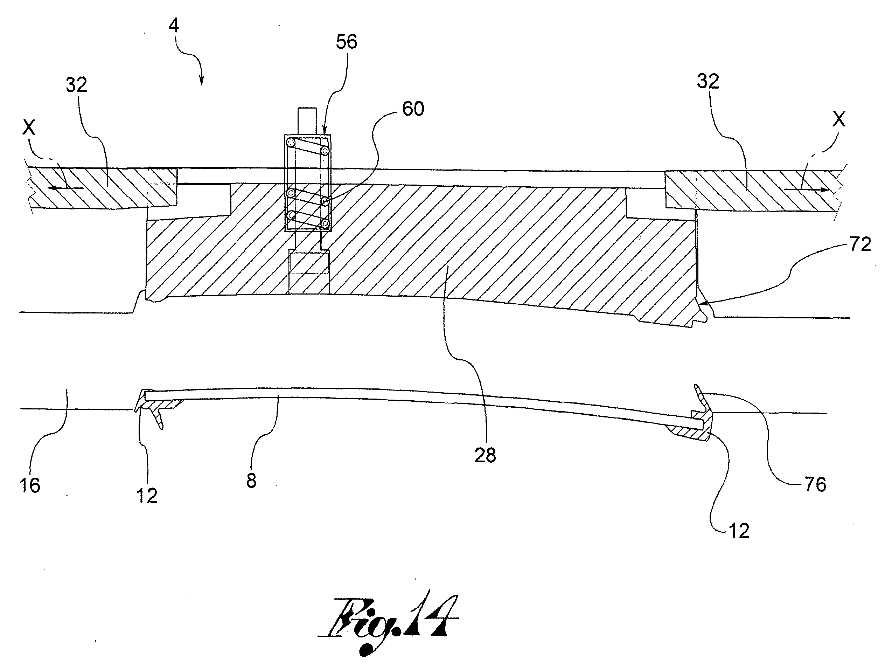

In the step of the final opening the mould 4 and extraction of the part, the closing and locking wedges 32 are also retracted (figure 14).

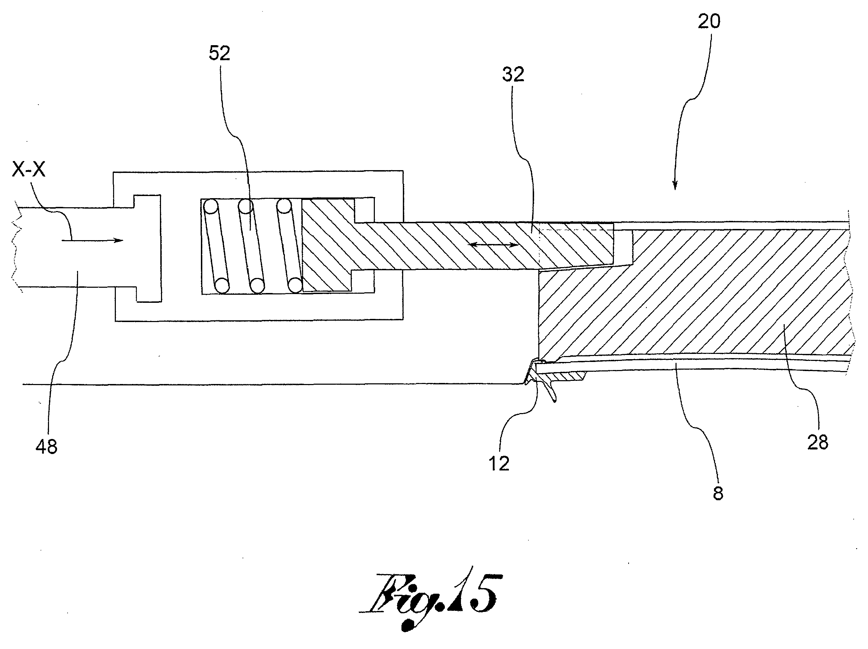

It should be noted that the closing and locking wedges 32 have an outline provided with a thrust wall 36, inclined and counter-shaped relative to a corresponding incline plane 40 associated with the insert 28; in this way the wedges 32 may advance inside the insert 28 and, based on such transversal advancing movement, they may modify the axial or vertical positioning of the insert 28 itself thanks to the sliding movement relative to the thrust wall 36 of the wedges 32 and the corresponding inclined plane 40 of the insert 28. The advancing movement of the closing and locking wedge 32 is controlled for example by a control piston 48; preferably between the control piston 48 and the closing and locking wedge 32 there are arranged self-regulating elastic means 52 which push so as to stress the advancing movement of the thrust wall 36 (figure 15).

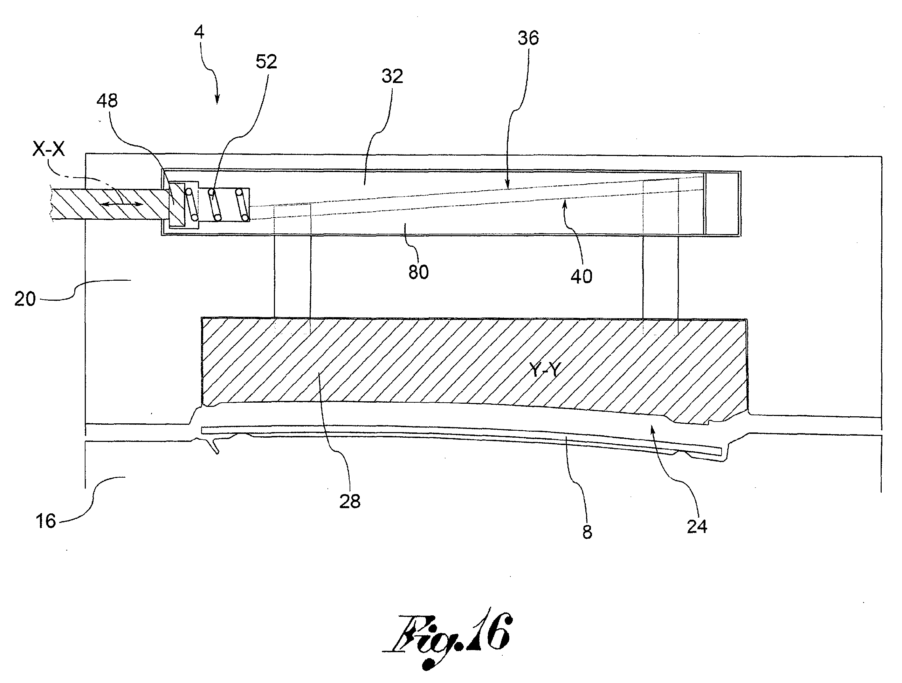

According to a further embodiment of the present invention (figures 16-19), the sheet 8 is first positioned on the punch 16, inside the mould 4 in an open condition (figure 16).

The insert 28 is constrained to the matrix 20 by means of the interposition of at least one closing and locking wedge 32 operatively connected to the insert 28. The closing and locking wedge 32 is provided with a thrust wall 36, inclined, which may slide onto a corresponding inclined plane 40 associated with the matrix 20.

A first closing step of the mould 4 provides for the realization of a primary stroke or closing stroke which allows to seal the injection chamber 24 outwards (figures 16-17).

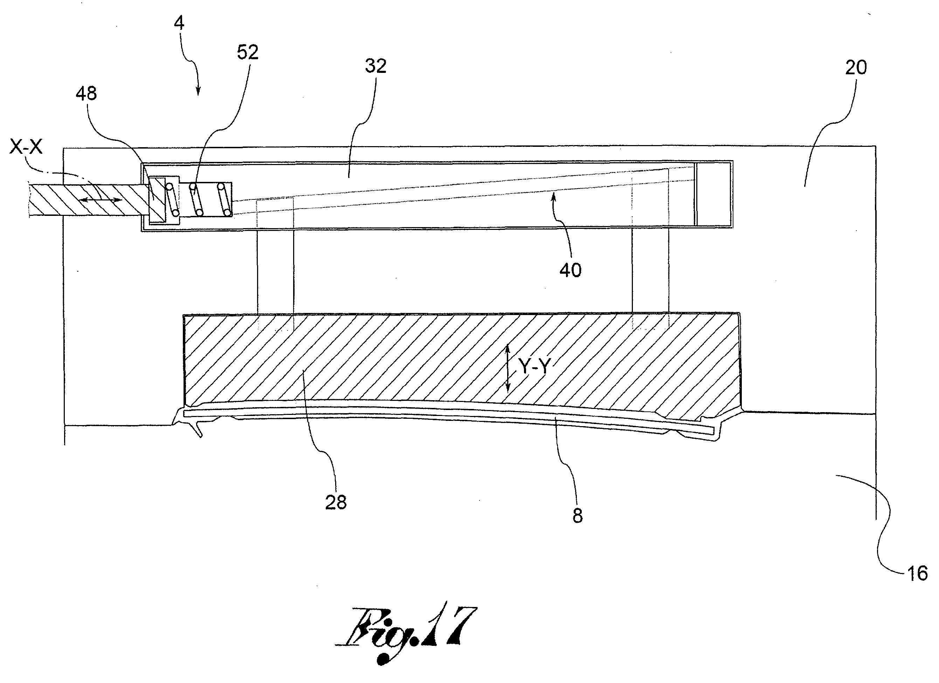

In this step the mould 4 is closed without having the insert 28 contact the sheet 8 (figure 17).

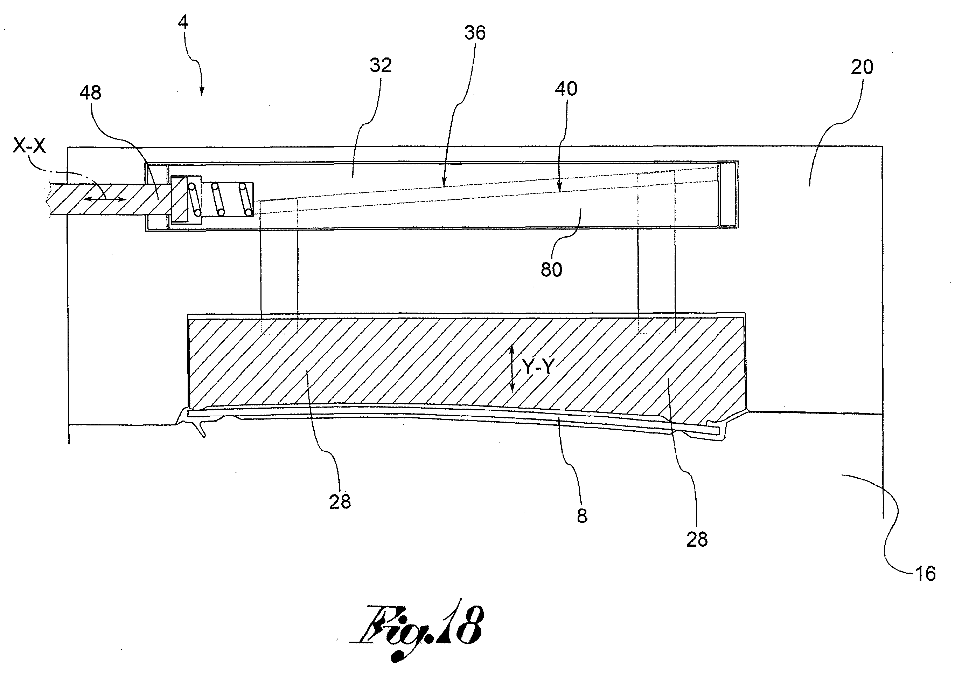

At this point it is necessary to realize the secondary or tightening stroke: in this way, the insert 28 is pushed into contact with the sheet 8, acting on the closing and locking wedge 32 which, in turn, is pushed by the control piston 48 (figure 18). In this step it is possible to calibrate the thrust exerted by the insert 28 onto the sheet 8, avoiding fortuitous breakages of the latter.

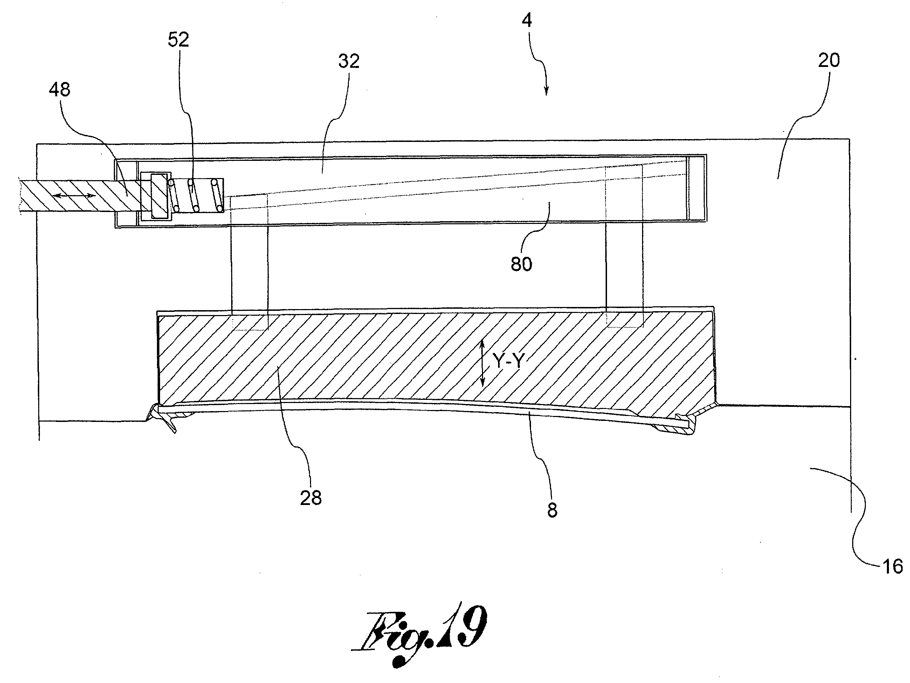

Lastly, it is possible to inject the plastic material inside the mould 4 (figure 19) and later open the mould 4 to extract the part.

As can be understood from the description, the mould according to the invention allows overcoming the disadvantages of the prior art.

In particular, the solution of the present invention provides for the realization and control of the closing of the mould in two steps, that is realizing a primary stroke or closing stroke which ensures the closing of the injection chamber outside of the mould and a later tightening stroke which ensures the closing of the injection chamber outside of the insert.

The presence of the closing and locking wedges allows to exert a controlled and precise thrust on the insert; such thrust may even be smaller than the required one by a conventional over-moulding process in that there is no need to increase the same thrust in order to counter-balance the counter-thrust due to the injected material; all this is due to the irreversibility of the mechanical coupling of the same wedges and allows to maintain unchanged the position of the wedges even during the later injection so as to avoid any uncontrolled overload on the sheet itself.

Therefore, compared to the solutions of the prior art, such as for example US19860855966, thanks to the present invention it is possible to avoid the risk of swelling of the closing in the moulding area with uncontrollable geometrical variations; therefore the present invention ensures the compliance with the geometrical design allowances as well as a better surface finish.

Furthermore, as seen, compared to known solutions, it is possible to better close the mould, since the force of the injected plastic is effectively opposed, thanks to the use of irreversible wedges.

Furthermore, compared to the solutions which provide for the closing with a control provided by suitably controlled jacks, the present invention provides for a simpler and cost-effective construction.

Furthermore, the present invention allows to extract geometries having complex outlines, even provided with undercuts.

In particular, the additional extraction device significantly simplifies the extraction of parts provided with frames acting as undercuts relative to the closing/opening axial direction of the mould, such as for example car windows.

A man skilled in the art may make several changes and adjustments to the moulds and moulding methods described above in order to meet specific and incidental needs, all falling within the scope of protection defined in the following claims.

## Claims

1. A mould (4) for over-moulding and/or encapsulation of a sheet (8) comprising
- a punch (16) suitable for supporting a sheet (8) to over-press and/or encapsulate,
- a matrix (20) suitable for closing on the punch (16) so as to delimit with the latter an injection chamber (24) to contain the material to be injected, with the matrix (20) and the punch (16) being movable axially to each other relative to an opening/closing axial direction (Y-Y) of the mould (4),
- an insert (28), slidably associated with said matrix (20) along at lest said axial direction (Y-Y), with the insert (28) interfacing with the sheet (8) and defining together with the sheet (8), the matrix (20) and the punch (16), the outline of said injection chamber (24), wherein
- the mould (4) comprises at least one closing and locking wedge (32) provided with a thrust wall (36), inclined, sliding on an inclined plane (40) associated with the insert (28), so that the displacement of the closing and locking wedge (32) along an actuating direction (X-X) leads to a translation of the insert (28), relative to the matrix (20) and the punch (16), along the axial direction (Y-Y),
the closing and locking wedge (32) is actuated by a control means (48) slidable along said actuating direction (X-X) **characterised in that** between the control means (48) and the closing and locking wedge (32) there are arranged self-regulating elastic means (52) which push the closing and locking wedge (32) against the insert (28), so as to transmit to the closing and locking wedge 32 and thus to the insert 28 and the sheet 8, a force sufficient to avoid flashes and, at the same time, to prevent the breakage of the sheet itself.

2. A mould (4) according to claim 1, wherein the self-regulating elastic means (52) are sized so as to ensure a rest allowance (90), i.e. there is provided a stroke of the control means (48) at which the self-regulating elastic means (52) do not exert any elastic action towards the same.

3. A mould (4) according to claim 1 or 2, wherein the control means (48) comprises a control piston (49) having a hydraulic and/or pneumatic actuation, axially slidable along the actuating direction (X-X) inside a cylinder (85).

4. A mould (4) according to any of claims 1 to 3, wherein said self-regulating elastic means (52) rest inside a housing chamber (51), between a head of the control cylinder (49) and the closing and locking wedge (32).

5. A mould (4) according to claim 4, wherein the housing chamber (51) which houses the self-regulating elastic means is partially delimited by a terminal (53), locked in position by a ring (54), so as to allow the quick disassembly of the terminal (53) and access to the self-regulating elastic means (52).

6. A mould (4) according to claim 5, wherein the terminal (53) is inserted in the housing chamber (51) so as to obtain a predetermined position, achieved by means of a shoulder or limit stop (55), so as to guarantee a precise control of the thrust provided by the self-regulating elastic means (52) as a function of the displacement of the control means (48).

7. A mould (4) according to any one of the preceding claims, wherein the insert (28) is provided with an inclined counter-plane (29) interacting with the closing and locking wedge (32) so as to obtain the lifting of the insert (28) when the retraction of the control means (48) is performed.

8. A mould (4) according to claim 7, wherein the housing chamber is delimited by a sleeve (33) housing the elastic means (52) and an end (35) of the closing and locking wedge (32), with said end (35) having a protrusion so as to obtain an undercut (37) with a corresponding recess (39) obtained on the sleeve (33), so that the retraction of the control means (48) leads to the retraction of the closing and locking wedge (32).

9. A mould (4) according to any one of the preceding claims, wherein the mechanical coupling between the closing and locking wedge (32) and the insert (28) is of the irreversible type.

10. A mould (4) according to any one of the preceding claims, wherein the insert (28) comprises at least one locking seat (44) provided with said inclined plane (40), with the locking seat (44) accommodating at least partially the closing and locking wedge (32) so at to make the sliding possible between the thrust wall (36) and the inclined plane (40).

11. A mould (4) according to any one of the preceding claims, wherein the insert (28) is provided with an additional extraction device (56) which provides an additional stroke (84) to the insert (28) relative to the matrix, in addition to a tightening stroke provided to the insert (28) by the closing and locking wedge (32).

12. A mould (4) according to claim 11, wherein said additional extraction device (56) comprises a thrust spring (60) elastically affecting the insert (28) approaching the punch (16), along said axial direction (Y-Y).

13. A mould (4) according to any one of the preceding claims, wherein the insert (28) comprises at least one appendix (64) which is at least partially counter-shaped relative to a perimeter matrix portion (68), so as to identify therewith an undercut interspace (72), relative to the direction (Y-Y), with said undercut interspace (72) being in fluid communication with the injection chamber (24).

14. A mould (4) according to any of claims 1 to 8, wherein the insert (28) is rigidly associated with a block (80) having an inclined plane (40) onto which the thrust wall (36) of the closing and locking wedge (32) slides, wherein the closing and locking wedge (32) is actuated by a control piston (48) along said actuating direction (X-X) and wherein between the control piston (48) and the closing and locking wedge (32) there are arranged self-regulating elastic means (52) which push the closing and locking wedge (32) against the insert (28).

15. A method for over-moulding and/or encapsulating a sheet (8) comprising the steps of:
- providing a mould (4) according to any one of the preceding claims,
- placing onto the insert (28) a sheet (8) to over-press or encapsulate,
- performing a first closing of the mould (4), providing the matrix (20) and/or the punch (16) with a closing stroke or primary stroke, so as to close the injection chamber (24) and seal it towards the outside of the mould (5),
- performing a tightening stroke or secondary stroke of the insert (28) so as to push it against the sheet (8) and/or the punch (16) along the axial direction (Y-Y) and to seal the injection chamber (24) against the insert (28) itself,
- wherein said tightening stroke is carried out by means of a closing and locking wedge (32) actuated by a control means (48) slidable along said actuating direction (X-X) and wherein between the control means (48) and the closing and locking wedge (32) there are arranged self-regulating elastic means (52) which push the closing and locking wedge (32) against the insert (28), so as to transmit to the closing and locking wedge (32) and thus to the insert (28), a force sufficient to avoid flashes and, at the same time, to prevent the breakage of the sheet itself.
- performing the injection so as to over-press at least partially the sheet (8).

## Patentansprüche

1. Formwerkzug (4) zum Umspritzen und/oder Einbetten einer Platte (8), das umfasst:
- einen Stempel (16), der geeignet ist, eine Platte (8) zum Umspritzen und/oder Einbetten zu halten,
- eine Matrize (20), die geeignet ist, sich auf dem Stempel (16) zu schließen, um mit dem Letzteren eine Einspritzkammer (24) zu begrenzen, so dass sie das einzuspritzende Material enthält, wobei die Matrize (20) und der Stempel (16) relativ zu einer Öffnungs-/Schließaxialrichtung (Y-Y) des Formwerkzeugs (4) axial zueinander beweglich sind;
- einen Einsatz (28), der wenigstens entlang der Axialrichtung (Y-Y) verschiebbar mit der Matrize (20) verbunden ist, wobei der Einsatz (28) eine Grenzfläche mit der Platte (8) bildet und zusammen mit der Platte (8), der Matrize (20) und dem Stempel (16) den Umriss der Einspritzkammer (24) bildet, wobei
- das Formwerkzeug (4) wenigstens einen Schließ- und Sperrkeil (32) umfasst, der mit einer Axialdruckwand (36) versehen ist, der schräg ist, auf einer geneigten Ebene (40), die zu dem Einsatz (38) gehört, gleitet, so dass die Verschiebung des Schließ- und Sperrkeils (32) entlang einer Betätigungsrichtung (X-X) zu einer Verschiebung des Einsatzes (28) relativ zu der Matrize (20) und dem Stempel (16) entlang der Axialrichtung (Y-Y) führt,
wobei der Schließ- und Sperrkeil (32) durch ein Steuermittel (48), das entlang der Betätigungsrichtung (X-X) verschiebbar ist, betätigt wird, **dadurch gekennzeichnet, dass** zwischen dem Steuermittel (48) und dem Schließ- und Sperrkeil (32) sich selbst regulierende elastische Mittel (52) eingerichtet sind, die den Schließ- und Sperrkeil (32) gegen den Einsatz (28) drücken, um auf den Schließ- und Sperrkeil (32) und somit auf den Einsatz (28) und die Platte (8) eine Kraft zu übertragen, die ausreicht, um Pressgrate zu vermeiden, und gleichzeitig den Bruch der Platte selbst zu verhindern.

2. Formwerkzeug (4) nach Anspruch 1, wobei die sich selbst regulierenden elastischen Mittel (52) derart bemessen sind, dass sie einen Ruhespielraum (90) sicherstellen, d.h. es wird ein Hub des Steuermittels (48) bereitgestellt, bei dem die sich selbst regulierenden elastischen Mittel (52) keine elastische Tätigkeit gegen dasselbe ausüben.

3. Formpresswerkzeug (4) nach Anspruch 1 oder 2, wobei das Steuermittel (48) einen Steuerkolben (49) mit einer hydraulischen und/oder pneumatischen Betätigung, der axial entlang der Betätigungsrichtung (X-X) im Inneren eines Zylinders (85) verschiebbar ist, umfasst.

4. Formpresswerkzeug (4) nach einem der Ansprüche 1 bis 3, wobei die sich selbst regulierenden elastischen Mittel (52) im Inneren einer Gehäusekammer (51) zwischen einem Kopf des Steuerzylinders (49) und dem Schließ- und Sperrkeil (32) ruhen.

5. Formpresswerkzeug (4) nach Anspruch 4, wobei die Gehäusekammer (51), die die sich selbst regulierenden elastischen Mittel aufnimmt, teilweise durch einen Endpunkt (53) begrenzt ist, dessen Position durch einen Ring (54) gesperrt ist, um die schnelle Demontage des Endpunkts (53) und den Zugang zu den sich selbst regulierenden elastischen Mittel (52) zuzulassen.

6. Presswerkzeug (4) nach Anspruch 5, wobei der Endpunkt (53) in die Gehäusekammer (51) eingesetzt ist, um eine vorgegebene Position zu erzielen, die mit Hilfe eines Absatzes oder eines Grenzanschlags (55) erreicht wird, um eine präzise Steuerung des Axialdrucks, der von den sich selbst regulierenden elastischen Mitteln (52) bereitgestellt wird, als eine Funktion der Verschiebung des Steuermittels (48) sicherzustellen.

7. Formpresswerkzeug (4) nach einem der vorhergehenden Ansprüche, wobei der Einsatz (28) mit einer geneigten Gegenebene (29) versehen ist, die mit dem Schließ- und Sperrkeil (32) wechselwirkt, um das Heben des Einsatzes (28) zu erzielen, wenn das Zurückziehen des Steuermittels (48) durchgeführt wird.

8. Formpresswerkzeug (4) nach Anspruch 7, wobei die Gehäusekammer durch eine Hülse (33) begrenzt ist, die die elastischen Mittel (52) und ein Ende (35) des Schließ- und Sperrkeils (32) aufnimmt, wobei das Ende (35) einen Vorsprung hat, um eine Unterschneidung (37) zu erhalten, wobei eine entsprechende Aussparung (39) auf der Hülse (33) erhalten wird, so dass das Zurückziehen des Steuermittels (48) zu dem Zurückziehen des Schließ- und Sperrkeils (32) führt.

9. Formpresswerkzeug (4) nach einem der vorhergehenden Ansprüche, wobei die mechanische Kopplung zwischen dem Schließ- und Sperrkeil (32) und dem Einsatz (28) von irreversibler Art ist.

10. Formpresswerkzeug (4) nach einem der vorhergehenden Ansprüche, wobei der Einsatz (28) wenigstens einen Sperrsitz (44) umfasst, der mit der geneigten Ebene (40) versehen ist, wobei der Sperrsitz (44) den Schließ- und Sperrkeil (32) wenigstens aufnimmt, um das Gleiten zwischen der Axialdruckwand (36) und der geneigten Ebene (40) zu ermöglichen.

11. Formpresswerkzeug (4) nach einem der vorhergehenden Ansprüche, wobei der Einsatz (28) mit einer zusätzlichen Extraktionsvorrichtung (56) versehen ist, die dem Einsatz (28) neben einem Zusammenziehhub, der dem Einsatz (28) von dem Schließ- und Sperrkeil (32) verliehen wird, einen zusätzlichen Hub (84) relativ zu der Matrize bereitstellt.

12. Formpresswerkzeug (4) nach Anspruch 11, wobei die zusätzliche Extraktionsvorrichtung (56) eine Axialdruckfeder (60) umfasst, die den Einsatz (28), der sich dem Stempel (16) nähert, entlang der Axialrichtung (Y-Y) elastisch beeinflusst.

13. Formpresswerkzeug (4) nach einem der vorhergehenden Ansprüche, wobei der Einsatz (28) wenigstens einen Zusatz (64) umfasst, der relativ zu einem Umfangsmatrizenabschnitt (68) wenigstens teilweise gegengleich geformt ist, um damit einen Unterschneidungszwischenraum (72) relativ zu der Richtung (Y-Y) zu bestimmen, wobei der Unterschneidungszwischenraum (72) in einer Fluidverbindung mit der Einspritzkammer (24) steht.

14. Formpresswerkzeug (4) nach einem der Ansprüche 1 bis 8, wobei der Einsatz (28) starr mit einem Block (80) mit einer geneigten Ebene (40) verbunden ist, auf der die Axialdruckwand (36) des Schließ- und Sperrkeils (32) gleitet, wobei der Schließ- und Sperrkeil (32) durch einen Steuerkolben (48) entlang der Betätigungsrichtung (X-X) betätigt wird, und wobei zwischen dem Steuerkolben (48) und dem Schließ- und Sperrkeil (32) sich selbst regulierende elastische Mittel (52) angeordnet sind, die den Schließ- und Sperrkeil (32) gegen den Einsatz (28) drücken.

15. Verfahren zum Umspritzen und/oder Einbetten einer Platte (8), das die folgenden Schritte umfasst:
- Bereitstellen einer Form (4) nach einem der vorhergehenden Ansprüche,
- Anordnen einer Platte (8) zum Umspritzen und/oder Einbetten auf dem Einsatz (28),
- Durchführen eines ersten Schließens der Form (4), Versorgen der Matrize (20) und/oder des Stempels (16) mit einem Schließhub oder Primärhub, um die Einspritzkammer (24) zu schließen und sie nach außerhalb des Formpresswerkzeugs (5) abzudichten,
- Durchführen eines Zusammenziehhubs oder Sekundärhubs des Einsatzes (28), um ihn entlang der Axialrichtung (Y-Y) gegen die Platte (8) und/oder den Stempel (16) zu drücken und die Einspritzkammer (24) gegen den Einsatz (28) selbst abzudichten,
- wobei der Zusammenziehhub mit Hilfe eines Schließ- und Sperrkeils (32) ausgeführt wird, der durch ein Steuermittel (48) betätigt wird, das entlang einer Betätigungsrichtung (X-X) verschiebbar ist, und wobei zwischen dem Steuermittel (48) und dem Schließ- und Sperrkeil (32) sich selbst regulierende elastische Mittel (52) eingerichtet sind, die den Schließ- und Sperrkeil (32) gegen den Einsatz (28) drücken, um auf den Schließ- und Sperrkeil (32) und somit auf den Einsatz (28) eine Kraft zu übertragen, die ausreicht, um Pressgrate zu vermeiden, und gleichzeitig den Bruch der Platte selbst zu verhindern,
- Durchführen der Einspritzung, um die Platte (8) wenigstens teilweise zu umspritzen.

## Revendications

1. Moule (4) pour le surmoulage et/ou l'encapsulation d'une feuille (8) comprenant :
- un poinçon (16) approprié pour supporter une feuille (8) à surpresser et/ou encapsuler,
- une matrice (20) appropriée pour se fermer sur le poinçon (16) afin de délimiter avec ce dernier une chambre d'injection (24) pour contenir le matériau destine à être injecté, la matrice (20) et le poinçon (16) étant mobiles axialement l'un par rapport à l'autre relativement à une direction axiale d'ouverture/de fermeture (Y-Y) du moule (4),
- un élément rapporté (28), associé de façon coulissante à ladite matrice (20) le long d'au moins ladite direction axiale (Y-Y), l'élément rapporté (28) réalisant une interface avec la feuille (8) et définissant conjointement avec la feuille (8), la matrice (20) et le poinçon (16), le contour de ladite chambre d'injection (24), dans lequel
- le moule (4) comprend au moins une cale de fermeture et de verrouillage (32) pourvue d'une paroi de poussée (36), inclinée, coulissant sur un plan incliné (40) associé à l'élément rapporté (28), pour que le déplacement de la cale de fermeture et de verrouillage (32) le long d'une direction d'actionnement (X-X) entraîne une translation de l'élément rapporté (28), relativement à la matrice (20) et au poinçon (16), le long de la direction axiale (Y-Y), la cale de fermeture et de verrouillage (32) est actionnée par un moyen de commande (48) pouvant coulisser le long de ladite direction d'actionnement (X-X), **caractérisé en ce que**, entre le moyen de commande (48) et la cale de fermeture et de verrouillage (32), sont agencés des moyens élastiques autorégulateurs (52) qui poussent la cale de fermeture et de verrouillage (32) contre l'élément rapporté (28), afin de transmettre à la cale de fermeture et de verrouillage (32) et ainsi à l'élément rapporté (28) et à la feuille (8), une force suffisante pour éviter des bavures et, en même temps, pour empêcher la rupture de la feuille elle-même.

2. Moule (4) selon la revendication 1, dans lequel les moyens élastiques autorégulateurs (52) sont dimensionnés afin de garantir une tolérance de repos (90), à savoir une course du moyen de commande (48) est prévue à laquelle les moyens élastiques autorégulateurs (52) n'exercent aucune action élastique vers celui-ci.

3. Moule (4) selon la revendication 1 ou 2, dans lequel le moyen de commande (48) comprend un piston de commande (49) possédant un actionnement hydraulique et/ou pneumatique, pouvant coulisser axialement le long de la direction d'actionnement (X-X) à l'intérieur d'un cylindre (85).

4. Moule (4) selon l'une quelconque des revendications 1 à 3, dans lequel lesdits moyens élastiques autorégulateurs (52) reposent à l'intérieur d'une chambre de logement (51), entre une culasse du cylindre de commande (49) et la cale de fermeture et de verrouillage (32).

5. Moule (4) selon la revendication 4, dans lequel la chambre de logement (51) qui loge les moyens élastiques autorégulateurs est partiellement délimitée par un dispositif terminal (53), verrouillé en position par un anneau (54), afin de permettre le désassemblage rapide du dispositif terminal (53) et d'accéder aux moyens élastiques autorégulateurs (52).

6. Moule (4) selon la revendication 5, dans lequel le dispositif terminal (53) est inséré dans la chambre de logement (51) afin d'obtenir une position prédéterminée, atteinte au moyen d'un épaulement ou d'une butée de limite (55), afin de garantir une commande précise de la poussée fournie par les moyens élastiques autorégulateurs (52) en fonction du déplacement du moyen de commande (48).

7. Moule (4) selon l'une quelconque des revendications précédentes, dans lequel l'élément rapporté (28) est pourvu d'un contre-plan incliné (29) interagissant avec la cale de fermeture et de verrouillage (32) afin d'obtenir le levage de l'élément rapporté (28) lorsque la rétraction du moyen de commande (48) est réalisée.

8. Moule (4) selon la revendication 7, dans lequel la chambre de logement est délimitée par un manchon (33) logeant les moyens élastiques (52) et une extrémité (35) de la cale de fermeture et de verrouillage (32), ladite extrémité (35) possédant une protubérance afin d'obtenir une contre-dépouille (37) avec un évidement correspondant (39) obtenu sur le manchon (33), pour que la rétraction du moyen de commande (48) entraîne la rétraction de la cale de fermeture et de verrouillage (32).

9. Moule (4) selon l'une quelconque des revendications précédentes, dans lequel l'accouplement mécanique entre la cale de fermeture et de verrouillage (32) et l'élément rapporté (28) est du type irréversible.

10. Moule (4) selon l'une quelconque des revendications précédentes, dans lequel l'élément rapporté (28) comprend au moins un siège de verrouillage (44) pourvu dudit plan incliné (40), le siège de verrouillage (44) logeant au moins partiellement la cale de fermeture et de verrouillage (32) afin de rendre le coulissant possible entre la paroi de poussée (36) et le plan incliné (40).

11. Moule (4) selon l'une quelconque des revendications précédentes, dans lequel l'élément rapporté (28) est pourvu d'un dispositif d'extraction supplémentaire (56) qui fournit une course supplémentaire (84) à l'élément rapporté (28) relativement à la matrice, en plus d'une course de serrage fournie à l'élément rapporté (28) par la cale de fermeture et de verrouillage (32).

12. Moule (4) selon la revendication 11, dans lequel ledit dispositif d'extraction supplémentaire (56) comprend un ressort de poussée (60) affectant élastiquement l'élément rapporté (28) se rapprochant du poinçon (16), le long ladite direction axiale (Y-Y).

13. Moule (4) selon l'une quelconque des revendications précédentes, dans lequel l'élément rapporté (28) comprend au moins un appendice (64) qui est au moins partiellement contre-formé relativement à une portion de matrice périmétrique (68), afin d'identifier avec celle-ci un espace intermédiaire de contre-dépouille (72), relativement à la direction (Y-Y), ledit espace intermédiaire de contre-dépouille (72) étant en communication fluidique avec la chambre d'injection (24).

14. Moule (4) selon l'une quelconque des revendications 1 à 8, dans lequel l'élément rapporté (28) est rigidement associé à un bloc (80) possédant un plan incliné (40) sur lequel la paroi de poussée (36) de la cale de fermeture et de verrouillage (32) coulisse, dans lequel la cale de fermeture et de verrouillage (32) est actionnée par un piston de commande (48) le long de ladite direction d'actionnement (X-X) et dans lequel, entre le piston de commande (48) et la cale de fermeture et de verrouillage (32), sont agencés les moyens élastiques autorégulateurs (52) qui poussent la cale de fermeture et de verrouillage (32) contre l'élément rapporté (28).

15. Procédé pour surmouler et/ou encapsuler une feuille (8) comprenant les étapes de :
- la fourniture d'un moule (4) selon l'une quelconque des revendications précédentes,
- le placement, sur l'élément rapporté (28), d'une feuille (8) à surpresser ou encapsuler,
- la réalisation d'une première fermeture du moule (4), fournissant à la matrice (20) et/ou au poinçon (16) une course de fermeture ou une course primaire, afin de fermer la chambre d'injection (24) et de la sceller vers l'extérieur du moule (5),
- la réalisation d'une course de serrage ou course secondaire de l'élément rapporté (28) afin de le pousser contre la feuille (8) et/ou le poinçon (16) le long de la direction axiale (Y-Y) et de sceller la chambre d'injection (24) contre l'élément rapporté (28) lui-même, dans lequel ladite course de serrage est exécutée au moyen d'une cale de fermeture et de verrouillage (32) actionnée par un moyen de commande (48) pouvant coulisser le long de ladite direction d'actionnement (X-X) et dans lequel entre le moyen de commande (48) et la cale de fermeture et de verrouillage (32) sont agencés des moyens élastiques autorégulateurs (52) qui poussent la cale de fermeture et de verrouillage (32) contre l'élément rapporté (28), afin de transmettre à la cale de fermeture et de verrouillage (32) et ainsi à l'élément rapporté (28), une force suffisante pour éviter des bavures et, en même temps, pour empêcher la rupture de la feuille elle-même,
- la réalisation de l'injection afin de surpresser au moins partiellement la feuille (8).
